# EUROPÄISCHE PATENTSCHRIFT

(11) **EP 2 666 615 B1**
(45) Veröffentlichungstag und Bekanntmachung des Hinweises auf die Patenterteilung: **04.03.2015**
(21) Anmeldenummer: 12004027.4
(22) Anmeldetag: 23.05.2012
(51) Int. Cl.: B29C 70/30, B29D 99/00, F03D 1/06, B29C 65/00, B29C 65/48, B29C 33/30, B29L 31/08

(54) **Verfahren zur Herstellung einer Windenergieanlagenrotorblatthalbschale bzw. eines Windenergieanlagenrotorblatts und Herstellungsform zu diesem Zweck**
Method for producing a half shell of rotor blade for a wind energy assembly or for producing a rotor blade for a wind energy assembly and production mould for this purpose
Procédé de fabrication d'une demi-coque pour pale de rotor d'éolienne ou d'une pale de rotor d'éolienne et moule de fabrication à cette fin

(43) Veröffentlichungstag der Anmeldung: 27.11.2013
(73) Patentinhaber: Nordex Energy GmbH, 22419 Hamburg (DE)
(72) Erfinder: Austinat, Dirk, 17126 Jarmen (DE); Frankowski, Marco, 18347 Ostseebad Wustrom (DE)
(74) Vertreter: Hauck Patentanwaltspartnerschaft mbB

(56) Entgegenhaltungen:
- EP-A1- 2 106 900
- WO-A1-95/19500
- WO-A1-2011/113812
- JP-A- 61 192 864

## Beschreibung

Die Erfindung betrifft ein Verfahren zur Herstellung einer Windenergieanlagenrotorblatthalbschale, bei dem ein Fasermaterial in einer Form angeordnet wird, welche eine Innenseite, die eine aerodynamische Fläche der Halbschale vorgibt, und eine Quetschkante aufweist, die den Verlauf einer Hinterkante der Halbschale beschreibt. Bei dem Verfahren härtet ein das Fasermaterial umgebendes, flüssiges Kunststoffmaterial aus.

Die Erfindung betrifft außerdem ein Verfahren zur Herstellung eines Windenergieanlagenrotorblatts, bei dem eine erste Halbschale bereitgestellt wird. Eine zweite Halbschale wird in einer Form bereitgestellt. Anschließend werden die erste Halbschale und die zweite Halbschale miteinander verklebt.

Außerdem betrifft die Erfindung eine Herstellungsform zur Herstellung einer Windenergieanlagenrotorblatthalbschale mit einer Form, welche eine Innenseite, die eine aerodynamische Fläche der Halbschale vorgibt, und eine Quetschkante aufweist, die den Verlauf einer Hinterkante der Halbschale beschreibt.

Halbschalen für Windenergieanlagenrotorblätter werden in der Regel getrennt von einander in gesonderten Halbschalenformen hergestellt, insbesondere in Vakuuminfusionsverfahren. Nach dem Aushärten werden die beiden Halbschalen miteinander verklebt, wobei sie in der Regel im Bereich der Hinterkante übereinander liegen, sodass die Dicke der Hinterkante von den Dicken der beiden Halbschalen und der dazwischen ausgebildeten Klebstoffschicht bestimmt wird. Es ist bekannt, dass insbesondere in den blattspitzennahen Bereichen des Rotorblatts möglichst dünne Hinterkanten aerodynamisch vorteilhaft sind und zu einer verringerten Geräuschentwicklung führen.

Aus der Druckschrift DE 10 2005 051 931 B4 ist ein Rotorblatt bekannt geworden, bei dem die beiden Halbschalen so mit einander verklebt werden, dass die Hinterkante ausschließlich von der saugseitigen Halbschale gebildet wird. Die Dicke der Hinterkante wird demnach nicht von beiden Halbschalen plus Klebstoffschicht, sondern allein von der saugseitigen Halbschale gebildet.

Aus der Druckschrift WO 2010/136432 A1 ist ein Windenergieanlagenrotorblatt bekannt geworden, bei dem das gesamte Rotorblatt nicht aus zwei Halbschalen zusammengefügt wird, sondern in einem einzigen Vakuuminfusionsverfahren hergestellt wird. Lediglich die Fasermaterialien werden in getrennte Halbschalenformen eingelegt. Das bekannte Rotorblatt weist außerdem eine dicke Hinterkante auf, in der ein Endkantengurt angeordnet ist.

Aus der Druckschrift US 2011/0135485 A1 ist ein Doppel-T-Träger-förmiges Strukturbauteil für ein Windenergieanlagenrotorblatt bekannt geworden. Einzelheiten dazu, wie das Rotorblatt aus diesem Strukturbauteil und weiteren Elementen zusammengefügt wird, sind nicht beschrieben.

Aus der Druckschrift WO 01/46582 A2 ist ein Windenergieanlagenrotorblatt bekannt geworden, das nicht aus Halbschalen aufgebaut ist, sondern aus einer Vielzahl von Segmenten, die mittels elastischer Fugen an einen zentral angeordneten Holmkasten angesetzt sind.

EP 2 106 900 offenbart ein Verfahren gemäß dem Oberbegriff des Anspruchs 1, ein Verfahren gemäß dem Oberbegriff des Anspruchs 12 und eine Herstellungsform gemäß dem Oberbegriff des Anspruchs 15.

Davon ausgehend ist es die Aufgabe der Erfindung, ein Verfahren zur Herstellung einer Windenergieanlagenrotorblatthalbschale und eines Windenergieanlagenrotorblatts zur Verfügung zu stellen, das die Herstellung dünner, aerodynamisch vorteilhafter Hinterkanten vereinfacht, sowie eine hierfür geeignete Herstellungsform.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung einer Windenergieanlagenrotorblatthalbschale und weist die folgenden Schritte auf:
- Anordnen eines Fasermaterials in einer Form, welche eine Innenseite, die eine aerodynamische Fläche der Halbschale vorgibt, und eine Quetschkante, die den Verlauf einer Hinterkante der Halbschale beschreibt, aufweist,
- Aushärten eines das Fasermaterial umgebenden, flüssigen Kunststoffmaterials, wobei
- ein Einlegeteil relativ zu der Form in einer vorgegebenen Position, in der eine Oberfläche des Einlegeteils und ein Randabschnitt der Innenseite der Form an der Quetschkante unter einem Winkel aneinandergrenzen, angeordnet wird, so dass zwischen der Oberfläche des Einlegeteils und dem Randabschnitt eine dünn auslaufende Hinterkante der Halbschale ausgebildet wird.

Bei dem Fasermaterial kann es sich beispielsweise um Glasfasern, Kohlenstofffasern, Aramidfasern, sonstige geeignete Verstärkungsfasern oder eine Mischung aus diesen Faserarten handeln. Die Fasern können insbesondere in Form von Fasermatten oder Fasergelegen mit vorgegebener Orientierung der Fasern in der Form angeordnet werden.

Das flüssige Kunststoffmaterial umgibt das Fasermaterial und härtet während des Verfahrens aus, so dass die Fasern in eine Kunststoffmatrix eingebettet werden. Das Fasermaterial kann vor oder nach dem Anordnen in der Form mit dem flüssigen Kunststoffmaterial durchtränkt werden. Bereits vor dem Anordnen in der Form mit dem flüssigen Kunststoffmaterial durchtränkte Fasermaterialien sind Halbzeuge, die als Prepregs bezeichnet werden. Bei höherwertigen Halbzeugen kann es sich beispielsweise um pre-imprägnierte Faserhalbzeuge oder pultrudierte, d.h. in einem Strangziehverfahren hergestellte Vorfertigungsteile handeln. Alternativ kann das Fasermaterial nach dem Einlegen in die Form mittels Vakuuminfusionsverfahren durchtränkt werden.

Die Form weist eine Quetschkante auf, die den Verlauf der Hinterkante der herzustellenden Halbschale beschreibt. Die Quetschkante kann eine sichtbare Markierung sein, etwa eine Linie. Als Markierung kann auch eine Vertiefung oder Erhebung in der Form ausgebildet sein, beispielsweise eine Rille oder Einschnürung. Eine solche Ausgestaltung von Quetschkanten ist bekannt und führt normalerweise dazu, dass die der Form entnommene Halbschale eine entsprechende Markierung der vorgesehenen Hinterkantenkontur aufweist, die insbesondere für ein genaues Besäumen im Anschluss an die Fertigung der Halbschale verwendet werden kann. Bei der Erfindung kann es sich bei der Quetschkante auch um eine lediglich gedachte Linie handeln, die der beabsichtigten Lage der Hinterkante der Halbschale entspricht.

Das Fasermaterial ist von einem flüssigen Kunststoffmaterial umgeben, beispielsweise von einem Gemisch aus Harz und Härter, zum Beispiel auf Polyester-, Polyurethan- oder Epoxidbasis. Das flüssige Kunststoffmaterial kann aufgrund einer chemischen Reaktion aushärten. Um das Fasermaterial mit dem flüssigen Kunststoffmaterial zu durchtränken, kann insbesondere ein Vakuuminfusionsverfahren verwendet werden, bei dem die Form mit den darin angeordneten Fasermaterialien mit einer Vakuumhülle luftdicht abgeschlossen wird, beispielsweise mit einer Vakuumfolie, und anschließend ein Unterdruck in der Form erzeugt wird. Durch den Unterdruck wird das flüssige Kunststoffmaterial in die Form eingebracht, bis das Fasermaterial möglichst gleichmäßig und vollständig mit dem flüssigen Kunststoffmaterial durchtränkt ist. Das Einlegeteil kann gemeinsam mit dem Fasermaterial von der Vakuumhülle eingeschlossen werden.

Alternativ kann das Fasermaterial in Form von sogenannten Prepregs vorliegen. Unter Prepregs sind Halbzeuge zu verstehen, die aus Fasermaterial und einer ungehärteten Kunststoffmatrix bestehen, die die Fasern umgibt, mit anderen Worten aus dem Fasermaterial und einem flüssigen Kunststoffmaterial. Die Kunststoffmatrix besteht meistens aus einer Mischung aus Epoxidharz und -härter. Die Verarbeitung der Prepregs kann in der Form unter Druck- und Temperatureinwirkung erfolgen. Bei Erwärmung der Prepregs nimmt das Kunststoffmaterial eine zähflüssige Konsistenz an und verbindet das Fasermaterial.

Nach dem Aushärten des flüssigen Kunststoffmaterials ist das Fasermaterial in eine Kunststoffmatrix eingebettet und die Halbschale kann gegebenenfalls der Form entnommen werden.

Bei der Erfindung wird ein Einlegeteil in einer vorgegebenen Position relativ zu der Form angeordnet. Das Einlegeteil weist eine Oberfläche auf, die eine äußere Fläche der herzustellenden Rotorblatthalbschale vorgibt. In der vorgegebenen Position grenzen die Oberfläche des Einlegeteils und ein Randabschnitt der Innenseite der Form an der Quetschkante unter einem Winkel aneinander. Der Winkel entspricht dem im Bereich der Hinterkante ausgebildeten Winkel der an der Hinterkante zusammenlaufenden äußeren Flächen der Halbschale. Der Winkel kann insbesondere kleiner sein als 45°, aber auch kleiner als 30°, kleiner als 20° oder kleiner als 10°.

Zwischen der Oberfläche des Einlegeteils und dem Randabschnitt wird eine dünn auslaufende Hinterkante der Halbschale ausgebildet. Die im Bereich der Hinterkante zusammenlaufenden äußeren Flächen der Halbschale grenzen unter dem genannten Winkel aneinander. Hinterkanten mit Dicken von bis zu 10 mm oder bis zu 5 mm oder bis zu 3 mm sollen als dünn auslaufende Hinterkanten angesehen werden. Es versteht sich, dass die Hinterkante mehr oder weniger stark abgerundet sein kann.

Das Einlegeteil kann insbesondere in einem blattspitzennahen Bereich der Form angeordnet werden, beispielsweise überall dort, wo die Dicke der Hinterkante weniger als beispielsweise 10 mm, weniger als 5 mm oder weniger als 3 mm beträgt. Das Einlegeteil kann sich über eine Länge von beispielsweise mindestens 2 m, mindestens 5 m, mindestens 10 m oder mehr erstrecken, auch über eine Länge von mehr als 15 m oder mehr als 20 m. Die Breite des Einlegeteils und/oder die Breite der Oberfläche des Einlegeteils kann beispielsweise 5 cm oder mehr, 10 cm oder mehr, 20 cm oder mehr betragen. Das Einlegeteil kann in mehrere Einlegeteilsegmente unterteilt sein. Das Einlegeteil kann aus einem selbsttrennenden, d. h. nicht mit dem flüssigen Kunststoffmaterial verklebbaren Material bestehen, beispielsweise aus Silikon oder einem Silikon enthaltenden Material. Das Einlegeteil kann insbesondere in einem Gießverfahren hergestellt werden, insbesondere als Silikon- oder Polyurethangussteil.

Durch die Anordnung des Einlegeteils in der vorgegebenen Position kann die optimale, dünn auslaufende Form der Hinterkante maßgenau unmittelbar bei der Herstellung der Rotorblatthalbschale ausgebildet werden. Eine aufwendige Nachbearbeitung, insbesondere ein Besäumen der Halbschale im Bereich der Hinterkante, ist nicht erforderlich. Außerdem kann die Hinterkante der Halbschale besonders dünn ausgeführt werden und theoretisch nahezu auf eine Dicke Null auslaufen.

In einer Ausgestaltung reicht das in der Form angeordnete Fasermaterial bis an die Oberfläche des Einlegeteils heran. Damit, dass ein Gegenstand an eine Oberfläche oder eine Innenseite heranreicht oder an diese angrenzt, ist jetzt und im Folgenden gemeint, dass der Gegenstand sich im Wesentlichen bis an die Oberfläche oder Innenseite heran erstreckt. Nicht unbedingt erforderlich ist ein unmittelbares Angrenzen im Sinne einer Berührung zwischen dem Gegenstand und der Oberfläche bzw. Innenseite. Beispielsweise kann die Oberfläche bzw. Innenseite mit einem Gelcoat versehen sein oder es kann eine sonstige Schicht, insbesondere eine dünne Klebstoffschicht oder eine dünne Schicht des Kunststoffmaterials, zwischen dem Gegenstand und der Oberfläche bzw. Innenseite angeordnet sein. Dadurch, dass das in der Form angeordnete Fasermaterial bis an die Oberfläche des Anlegeteils heranreicht, wird eine hohe Festigkeit der dünn auslaufenden Hinterkante der Halbschale erzielt.

In einer Ausgestaltung verläuft die Oberfläche des Einlegeteils von der Quetschkante bis zu einem Abstand von der Innenseite, der größer ist als eine Materialstärke der Halbschale. Die Materialstärke der Halbschale kann insbesondere in einem Bereich nahe der dünn auslaufenden Hinterkante gemessen werden, insbesondere in einem Abschnitt mit im Wesentlichen gleichmäßiger Materialstärke, d.h. in einem sich noch nicht zur Hinterkante hin verjüngenden Abschnitt der Halbschale. Die Materialstärke kann beispielsweise 10 mm oder mehr betragen. Bei dieser Ausgestaltung gibt die Oberfläche des Einlegeteils die äußere Fläche der Halbschale auf einer Seite der dünn auslaufenden Hinterkante vor.

In einer Ausgestaltung wird das Einlegeteil in der vorgegebenen Position mit Positionierungsmitteln positioniert und/oder mit Befestigungsmitteln befestigt. Die Positionierungsmittel können beispielsweise Führungsstifte und/oder Öffnungen, Anschläge oder Markierungen an der Form und/oder am Einlegeteil sein, die die vorgegebene Position des Einlegeteils relativ zu der Form kennzeichnen und/oder beim Ansetzen des Einlegeteils an die Form fest vorgeben. Alternativ oder zusätzlich können Befestigungsmittel vorgesehen sein, mit denen das Einlegeteil in der vorgegebenen Position befestigt wird, beispielsweise Klemmen, Schrauben, Magnetverschlüsse oder sonstige Befestigungselemente.

In einer Ausgestaltung wird das Fasermaterial nach dem Anordnen in der Form mit dem flüssigen Kunststoffmaterial durchtränkt. Dies kann beispielsweise in einem Vakuuminfusionsverfahren geschehen.

Bei einem Verfahren zur Herstellung eines Windenergieanlagenrotorblatts ist vorgesehen, eine erste Halbschale mit dem vorstehend erläuterten Verfahren zur Herstellung einer Windenergieanlagenrotorblatthalbschale herzustellen. Außerdem wird eine zweite Halbschale bereitgestellt. Anschließend werden die erste Halbschale und die zweite Halbschale miteinander verklebt. Beim Verkleben kann sich die erste Halbschale noch in der Form befinden, in der sie hergestellt worden ist. Lediglich das Einlegeteil wird vor dem Verkleben mit der zweiten Halbschale entfernt.

In einer Ausgestaltung ist eine Endkante des Rotorblatts von der Hinterkante der ersten Halbschale gebildet. Erste und zweite Halbschale sind also nach dem Verkleben so angeordnet, dass die dünn auslaufende Hinterkante der ersten Halbschale die Endkante des Rotorblatts bildet. Die bei der Herstellung der Windenergieanlagenrotorblatthalbschale erreichte Präzision der dünn auslaufenden Hinterkante bestimmt also maßgeblich die aerodynamischen Eigenschaften der Endkante des Rotorblatts.

In einer Ausgestaltung bildet die Hinterkante der ersten Halbschale jeweils eine aerodynamische Fläche auf einer Druckseite und auf einer Saugseite des Rotorblatts. Aerodynamische Flächen des Rotorblatts sind diejenigen Flächen, die im Betrieb von der Luft umströmt werden und zur aerodynamischen Leistung des Rotorblatts beitragen. Unter normalen Betriebsbedingungen entsteht an der Druckseite des Rotorblatts ein Überdruck und an der Saugseite ein Unterdruck. Bei herkömmlichen Rotorblättern werden Druck- und Saugseite im Wesentlichen vollständig von den druck- und saugseitigen Halbschalen gebildet. Dies gilt jedenfalls für die an die Endkante des Rotorblatts angrenzenden Abschnitte der Druck- und Saugseite. An der Endkante treffen Druckseite und Saugseite bei herkömmlichen Rotorblättern dort zusammen, wo die beiden Halbschalen miteinander verklebt sind. Bei der Erfindung bildet die Hinterkante der ersten Halbschale aerodynamische Flächen sowohl auf der Druckseite als auch auf der Saugseite. Damit wird das aerodynamische Verhalten des Rotorblatts im Bereich der Endkante im Wesentlichen allein von der ersten Halbschale bestimmt. Auch aus diesem Grund kommt die erreichbare Präzision der dünn auslaufenden Hinterkante der aerodynamischen Leistungsfähigkeit des Rotorblatts zugute.

In einer Ausgestaltung bildet entweder die erste Halbschale eine Druckseite des Rotorblatts und eine beim Herstellen der ersten Halbschale an die Oberfläche des Einlegeteils angrenzende Schrägfläche der ersten Halbschale bildet einen Teil der Saugseite des Rotorblatts oder die erste Halbschale bildet eine Saugseite des Rotorblatts und eine beim Herstellen der ersten Halbschale an die Oberfläche des Einlegeteils angrenzende Schrägfläche der ersten Halbschale bildet einen Teil der Druckseite des Rotorblatts. Besonders vorteilhaft ist die erste Variante, bei der der Übergang zwischen den beiden Halbschalen an der Saugseite ausgebildet ist. In diesem Fall kann die Druckseite jedenfalls in ihrem hinteren Bereich, gegebenenfalls auch über die gesamte Profiltiefe, allein von der ersten Halbschale gebildet werden. Unter Umständen schwer vermeidbare, geringfügige Beeinträchtigungen der Oberfläche im Übergangsbereich zwischen den beiden Halbschalen befinden sich dann ausschließlich an der Saugseite, so dass sie keine Beeinträchtigung für das besonders wichtige, glatte Abströmen an der Druckseite zur Folge haben.

In einer Ausgestaltung wird die zweite Halbschale mit einer Klebefläche mit der ersten Halbschale verklebt, die benachbart zu der Schrägfläche angeordnet ist. Die Klebefläche kann unmittelbar an die Schrägfläche angrenzen. Sie befindet sich dann in einem Abstand entsprechend der Breite der Schrägfläche von der Hinterkante der ersten Halbschale und der Endkante des Rotorblatts. Die mit dieser Klebefläche verklebte Hinterkante der zweiten Halbschale erstreckt sich also so weit wie in Anbetracht der erforderlichen Klebefuge möglich bis an die Schrägfläche heran. Dies begünstigt eine glatte und aerodynamisch optimale Gestaltung des Übergangs zwischen den beiden Halbschalen.

In einer Ausgestaltung befindet sich die zweite Halbschale beim Verkleben in einer weiteren Form, die eine Innenseite aufweist, die über die zweite Halbschale nach hinten übersteht und eine aerodynamische Fläche der zweiten Halbschale nach hinten fortsetzt, wobei die erste Halbschale an die Innenseite der weiteren Form angrenzt. Diese Ausgestaltung vereinfacht das präzise Verkleben der beiden Halbschalen miteinander, weil diejenigen Bereiche der ersten Halbschale, die an die weitere Form angrenzen, automatisch die von der zweiten Halbschale ausgebildete aerodynamische Fläche in der gewünschten Weise nach hinten fortsetzen. Die erste Halbschale kann insbesondere mit der beschriebenen Schrägfläche an die Innenseite der weiteren Form angrenzen, insbesondere flächig oder vollflächig.

In einer Ausgestaltung wird eine Klebefuge zwischen erster und zweiter Halbschale im Bereich der Klebefläche bis an die Innenseite der weiteren Form heran mit Klebstoff gefüllt. Die Innenseite der weiteren Form verschließt die Klebefuge. Dadurch wird der zwischen den beiden Halbschalen angeordnete Spalt vollständig bis an die gewünschte aerodynamische Fläche heran gefüllt. Überschüssiger Klebstoff wird in das Innere des Rotorblatts verdrängt. Dadurch kann eine aufwendige Nachbearbeitung der Rotorblattoberfläche entfallen, insbesondere ist es nicht erforderlich, einen verbleibenden Spalt durch Spachteln zu schließen.

Die oben genannte Aufgabe wird ebenfalls gelöst durch das Verfahren mit den Merkmalen des Anspruchs 12. Vorteilhafte Ausgestaltungen sind in den sich anschließenden Unteransprüchen angegeben.

Das Verfahren dient zur Herstellung eines Windenergieanlagenrotorblatts und weist die folgenden Schritte auf:
- Bereitstellen einer ersten Halbschale in einer Form,
- Bereitstellen einer zweiten Halbschale in einer weiteren Form,
- Verkleben der ersten Halbschale mit der zweiten Halbschale, wobei
- die weitere Form eine Innenseite aufweist, die über die zweite Halbschale nach hinten übersteht und eine aerodynamische Fläche der zweiten Halbschale nach hinten fortsetzt, und
- die erste Halbschale an der Innenseite der weiteren Form anliegt.

Diese Lösung greift die in den vorstehend beschriebenen Ausgestaltungen genannte Idee auf, beim Verkleben der beiden Halbschalen auf einfache Weise eine aerodynamisch optimale Form zu erzielen. Daher wird auf die vorstehenden Erläuterungen zu den betreffenden Ausgestaltungen verwiesen. Das Verfahren kann unabhängig davon ausgeführt werden, wie die erste Halbschale im Einzelnen hergestellt wurde. Es versteht sich, dass hierfür eines der vorstehend erläuterten Verfahren verwendet werden kann. Dies ist allerdings nicht erforderlich. Insbesondere kann die erste Halbschale ohne die Verwendung des beschriebenen Einlegeteils hergestellt werden.

Bei dem Verfahren sind, ebenso wie bei den zuvor beschriebenen Verfahren, die beiden Halbschalen beim Verkleben miteinander bereits ausgehärtet. Wie bei den zuvor beschriebenen Verfahren auch, wird entweder die Druckseite oder die Saugseite allein von der ersten Halbschale gebildet. Die jeweils andere Seite wird in Strömungsrichtung von vom nach hinten gebildet von der zweiten Halbschale, der Klebefuge zwischen erster und zweiter Halbschale und einer Oberfläche der ersten Halbschale, die beim Verkleben an die Innenseite der Form angrenzend bzw. an der Innenseite der Form anliegend angeordnet wurde. Diese Oberfläche kann insbesondere die vorstehend erläuterte Schrägfläche sein.

In einer Ausgestaltung weist die erste Halbschale eine dünn auslaufende Hinterkante mit einer Schrägfläche auf und beim Verkleben mit der zweiten Halbschale grenzt die erste Halbschale mit der Schrägfläche flächig an die Innenseite der Form an. Auf diese Weise wird eine dem gewünschten aerodynamischen Profil exakt entsprechende Anordnung der beiden Halbschalen beim Verkleben gewährleistet.

In einer Ausgestaltung wird eine zwischen den beiden Halbschalen angeordnete Klebefuge bis an die Innenseite der Form heran mit Klebstoff gefüllt. Hierzu wird auf die vorstehenden Erläuterungen verwiesen.

Die oben genannte Aufgabe wird ebenfalls gelöst durch die Herstellungsform mit den Merkmalen des Anspruchs 15. Die Herstellungsform dient zur Herstellung einer Windenergieanlagenrotorblatthalbschale und hat
- eine Form, welche eine Innenseite, die eine aerodynamische Fläche der Halbschale vorgibt, und eine Quetschkante, die den Verlauf einer Hinterkante der Halbschale beschreibt, aufweist,
- ein Einlegeteil, das eine Oberfläche aufweist, und
- Positionierungsmittel zur Positionierung und/oder Befestigungsmittel zur Befestigung des Einlegeteils in einer vorgegebenen Position relativ zu der Form, wobei
- in der vorgegebenen Position die Oberfläche des Einlegeteils und ein Randabschnitt der Innenseite der Form an der Quetschkante unter einem Winkel aneinandergrenzen, sodass zwischen der Oberfläche des Einlegeteils und dem Randabschnitt eine dünn auslaufende Hinterkante hergestellt werden kann.

Die Herstellungsform ist bestimmt zur Herstellung einer Windenergieanlagenrotorblatthalbschale gemäß dem vorstehend erläuterten Verfahren. Zu den Merkmalen und Vorteilen der Herstellungsform wird auf die vorstehenden Erläuterungen des Verfahrens verwiesen.

Die Erfindung wird nachfolgend anhand eines in Figuren dargestellten Ausführungsbeispiels näher erläutert. Es zeigen:
- Fig. 1: eine mit dem erfindungsgemäßen Verfahren hergestellte Windenergieanlagenrotorblatthalbschale in einer schematischen, perspektivischen Darstellung,
- Fig. 2: ein mit dem erfindungsgemäßen Verfahren hergestelltes Windenergieanlagenrotorblatt in einer schematischen, perspektivischen Darstellung,
- Fig. 3: einen Teil einer erfindungsgemäßen Herstellungsform mit einem Teil einer darin hergestellten ersten Halbschale im Querschnitt,
- Fig. 4: einen Teil einer zweiten Halbschale in einer weiteren Form im Querschnitt,
- Fig. 5: Teile einer ersten und einer zweiten Halbschale während des Verklebens im Querschnitt.

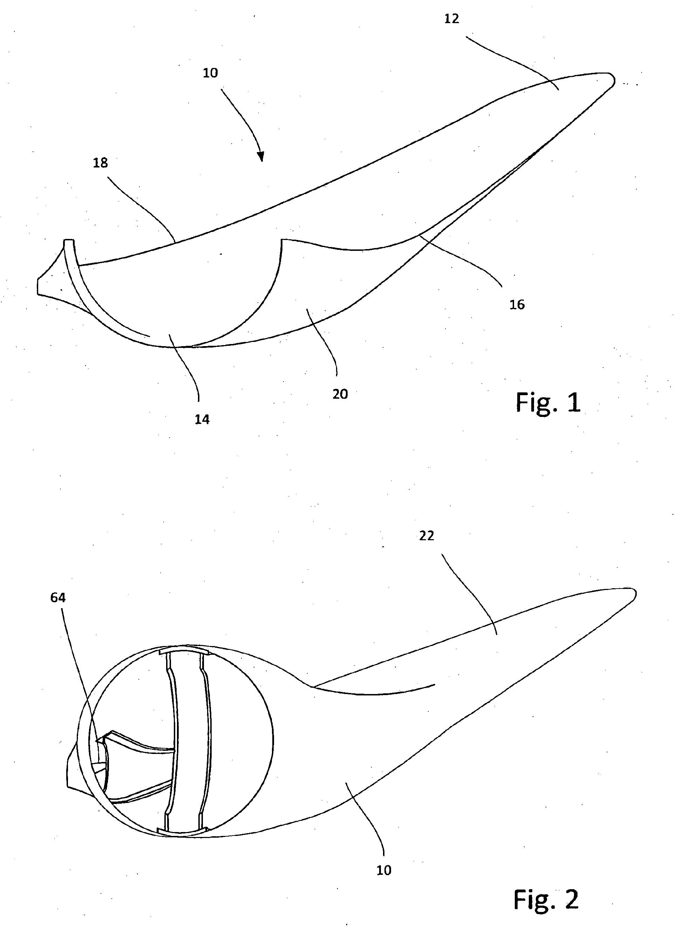

Die in Fig. 1 dargestellte Windenergieanlagenrotorblatthalbschale 10 hat ein blattspitzenseitiges Ende 12, ein blattwurzelseitiges Ende 14, eine Vorderkante 16 und eine Hinterkante 18. Die Außenseite 20 der Halbschale 10 bildet eine aerodynamische Fläche des Rotorblatts, entweder die Druckseite oder die Saugseite.

In der Fig. 2 ist die erste Halbschale 10 der Fig. 1 im mit einer zweiten Halbschale 22 verbundenen Zustand gezeigt. Zusammen bilden die beiden Halbschalen 10, 22 ein Windenergieanlagenrotorblatt mit einer Endkante 64, die zumindest in einem blattspitzennahen Längsabschnitt des Rotorblatts von der Hinterkante 18 der ersten Halbschale 10 gebildet ist.

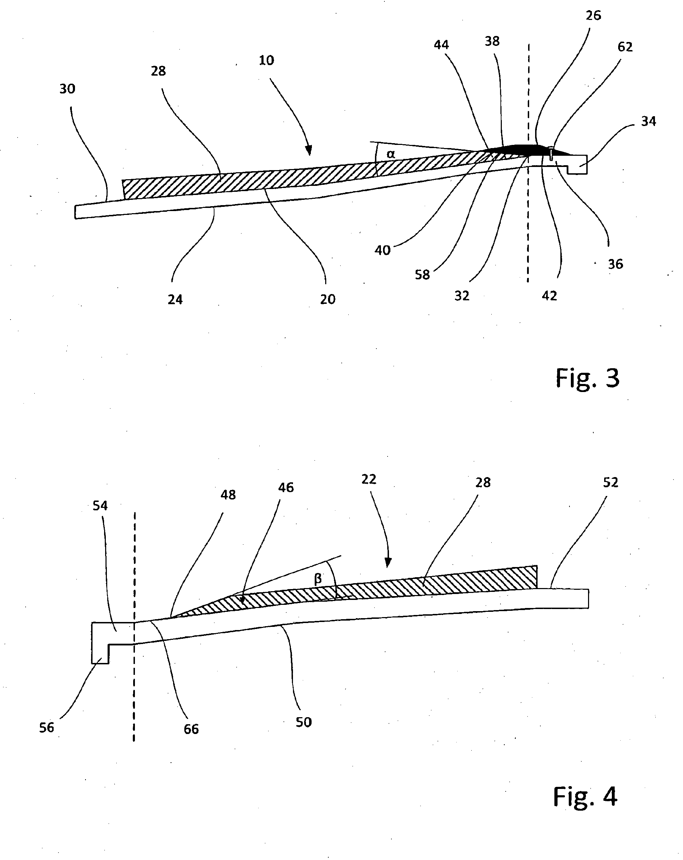

Weitere Einzelheiten sind besser aus den Querschnittsdarstellungen der Fig. 3 bis 5 erkennbar. Fig. 3 zeigt eine Herstellungsform, die eine Form 24 und ein Einlegeteil 26 aufweist. In der Form 24 ist ein Fasermaterial 28 angeordnet, das nach dem Durchtränken mit einem flüssigen Kunststoffmaterial und dem Aushärten des flüssigen Kunststoffmaterials gemeinsam mit dem Kunststoffmaterial die erste Halbschale 10 bildet.

Sowohl von der Form 24 als auch von dem die erste Halbschale 10 bildenden Fasermaterial 28 ist in der Fig. 3 nur ein Teil im Bereich der Hinterkante 18 dargestellt. Sowohl die Form 24 als auch das Fasermaterial 28 kann sich bis zu der Vorderkante 16 der herzustellenden ersten Halbschale 10 bzw. im Fall der Form 24 auch darüber hinaus erstrecken.

Die Form 24 hat eine Innenseite 30, die eine aerodynamische Fläche der ersten Halbschale 10 vorgibt, nämlich die an die Innenseite 30 der Form 24 angrenzende Außenseite 20 der ersten Halbschale 10. Die Form 24 weist an der Innenseite 30 außerdem eine Quetschkante 32 auf, deren Lage durch die gestrichelte Linie veranschaulicht wird. Die Form 24 steht nach hinten über die Quetschkante 32 über und weist dort einen mit einem Kragen 34 versehenen Rand 36 auf. Auf der anderen Seite der Quetschkante 32 weist die Innenseite 30 einen Randabschnitt 38 auf, der eine Breite im Bereich von beispielsweise 1 cm bis 20 cm aufweist und an die Quetschkante 32 angrenzt.

Das Einlegeteil 26 ist ein in einem Gieß- oder Laminierverfahren hergestellter Strang aus einem Silikon- oder Laminatmaterial. Es hat einen im Wesentlichen trapezförmigen Querschnitt. Das Einlegeteil 26 weist eine Oberfläche 40 auf, die an die Quetschkante 32 der Form 24 angrenzt. Mit einer an die Oberfläche 40 angrenzenden Fläche 42 liegt das Einlegeteil 26 am Rand 36 der Form 24 an.

Die Oberfläche 40 des Einlegeteils 26 und der Randabschnitt 38 der Innenseite 30 der Form 24 sind einander gegenüberliegend angeordnet. Zwischen beiden ist ein spitzer Winkel α ausgebildet, der im dargestellten Beispiel eine Größe von ungefähr 20° aufweist.

Das in der Form 24 angeordnete Fasermaterial 28 wurde teilweise unter das Einlegeteil 26 vorgeschoben. Es grenzt an die Oberfläche 40 an, so dass nach der Infusion und Aushärtung des flüssigen Kunststoffmaterials eine Schrägfläche 58 entsteht. Zwischen der Oberfläche 40 und dem Randabschnitt 38 wird bei der Herstellung der ersten Halbschale 10 eine dünn auslaufende Hinterkante 44 der ersten Halbschale 10 ausgebildet.

In der Fig. 3 nur angedeutet sind Positionierungsmittel 62 in Form eines Gewindebolzens, mit dem das Einlegeteil 26 an der Form 24 positioniert und befestigt wird.

In der Fig. 4 ist der hintere Teil der zweiten Halbschale 22 aus Fig. 2 im Querschnitt dargestellt. Er besteht ebenfalls aus einem Fasermaterial 28 und weist in einem Bereich nahe seiner Hinterkante 48 eine Materialstärke 46 von beispielsweise 10 mm auf. Zur Hinterkante 48 hin nimmt die Materialstärke 46 gleichmäßig ab, so dass die erste Halbschale 22 gleichmäßig dünn ausläuft mit einem Winkel β, der im Wesentlichen dem Winkel α zwischen der Oberfläche 40 des Einlegeteils 26 und dem Randabschnitt 38 der Innenseite 30 der Form 24 entspricht.

In der Fig. 4 befindet sich die zweite Halbschale 22 in einer weiteren Form 50. Die weitere Form 50 gibt mit ihrer Innenseite 52 eine aerodynamische Fläche der zweiten Halbschale 22 vor, nämlich die an die Innenseite 52 angrenzende äußere Fläche der ersten Halbschale 22. Außerdem hat die weitere Form 50 ebenfalls einen Rand 54, an dem ein Kragen 56 ausgebildet ist. Die gestrichelte Linie veranschaulicht die Lage der an der Form 24 ausgebildeten Quetschkante 32, wenn diese zum Verkleben der ersten Halbschale 10 mit der zweiten Halbschale 22 in der hierfür vorgesehenen Position an der weiteren Form 50 angeordnet ist. Man erkennt, dass dann die Quetschkante 32 an der Form 24 in einem Abstand von der Hinterkante 48 der zweiten Halbschale 22 angeordnet ist.

Die Innenseite 52 der Form 50 steht nach hinten über die zweite Halbschale 22 über und setzt, wie in der Fig. 4 erkennbar, in dem Bereich 66 die von der Außenseite der zweiten Halbschale 22 gebildete aerodynamische Fläche nach hinten fort.

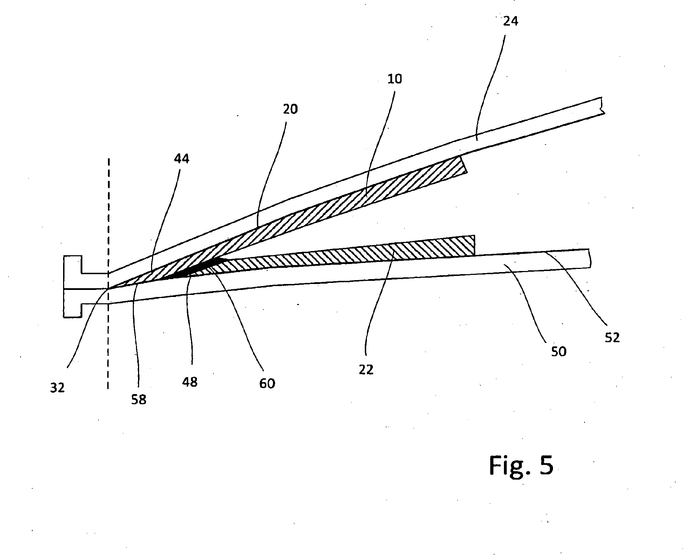

Fig. 5 zeigt die Anordnung der in den Fign. 3 und 4 gezeigten Teile während des Verklebens der ersten Halbschale 10 mit der zweiten Halbschale 22. Die gestrichelte Linie gibt wieder die genaue Lage der Quetschkante 32 an den Formen 24, 50 an. Die weitere Form 50 befindet sich in der Fig. 5 unten und ist im Wesentlichen in der in der Fig. 4 gezeigten Stellung verblieben, während die Form 24 mit der darin angeordneten ersten Halbschale 10 gegenüber der Lage in der Fig. 3 um 180° gedreht und auf die weitere Form 50 geklappt wurde.

Man erkennt, dass die Außenseite 20 der ersten Halbschale 10 sich bis an die Quetschkante 32 heran erstreckt und die in der Fig. 5 oben dargestellte aerodynamische Fläche allein bildet. Bei dieser aerodynamischen Fläche handelt es sich im Beispiel um die Druckseite.

Die dünn auslaufende Hinterkante 44 der ersten Halbschale 10 weist außerdem eine Schrägfläche 58 auf, deren genaue Anordnung bei der Herstellung der ersten Halbschale 10 von der Oberfläche 40 des Einlegeteils 26 vorgegeben wurde. Beim Verkleben, d. h. in der in Fig. 5 gezeigten Anordnung, liegt diese Schrägfläche 58 flächig an der Innenseite 52 der weiteren Form 50 an.

Zwischen der ersten Halbschale 10 und der zweiten Halbschale 22 ist eine Klebefuge 60 ausgebildet, die vollständig mit einem Klebstoff gefüllt ist. Der Klebstoff erstreckt sich bis an die Innenseite 52 der weiteren Form 50 heran. Die Innenseite 52 schließt die Klebefuge 60 ab und verhindert so ein Austreten von Klebstoff. Nach dem Entformen des Rotorblatts weist der Bereich der Endkante, der von der Schrägfläche 58 der ersten Halbschale 10, der mit Klebstoff gefüllten Klebefuge 60 und der Hinterkante 48 der zweiten Halbschale 22 gebildet wird, eine glatte Oberfläche auf, welche nicht mehr nachgearbeitet werden muss.

### Liste der verwendeten Bezugszeichen:

- 10: erste Halbschale
- 12: blattspitzenseitiges Ende
- 14: blattwurzelseitiges Ende
- 16: Vorderkante
- 18: Hinterkante
- 20: Außenseite der ersten Halbschale
- 22: zweite Halbschale
- 24: Form
- 26: Einlegeteil
- 28: Fasermaterial
- 30: Innenseite der Form
- 32: Quetschkante
- 34: Kragen
- 36: Rand
- 38: Randabschnitt
- 40: Oberfläche des Einlegeteils
- 42: Fläche
- 44: dünn auslaufende Hinterkante
- 46: Materialstärke
- 48: Hinterkante der zweiten Halbschale
- 50: weitere Form
- 52: Innenseite der weiteren Form
- 54: Rand
- 56: Kragen
- 58: Schrägfläche
- 60: Klebefuge
- 62: Positionierungsmittel
- 64: Endkante
- 66: Bereich zur Fortsetzung der aerodynamischen Fläche

## Patentansprüche

1. Verfahren zur Herstellung einer Windenergieanlagenrotorblatthalbschale mit den folgenden Schritten:
• Anordnen eines Fasermaterials (28) in einer Form (24), welche eine Innenseite (30), die eine aerodynamische Fläche der Halbschale vorgibt, und eine Quetschkante (32), die den Verlauf einer Hinterkante (18) der Halbschale beschreibt, aufweist,
• Aushärten eines das Fasermaterial (28) umgebenden, flüssigen Kunststoffmaterials, **dadurch gekennzeichnet, dass**
• ein Einlegeteil (26) relativ zu der Form (24) in einer vorgegebenen Position, in der eine Oberfläche (40) des Einlegeteils (26) und ein Randabschnitt (38) der Innenseite (30) der Form (24) an der Quetschkante (32) unter einem Winkel aneinandergrenzen, angeordnet wird, so dass zwischen der Oberfläche (40) des Einlegeteils (26) und dem Randabschnitt (38) eine dünn auslaufende Hinterkante (44) der Halbschale ausgebildet wird.

2. Verfahren nach Anspruch 1, **dadurch gekennzeichnet, dass** das in der Form (24) angeordnete Fasermaterial (28) bis an die Oberfläche (40) des Einlegeteils (26) heranreicht.

3. Verfahren nach Anspruch 1 oder 2, **dadurch gekennzeichnet, dass** die Oberfläche (40) des Einlegeteils (26) von der Quetschkante (32) bis zu einem Abstand von der Innenseite (30) verläuft, der größer ist als eine Materialstärke (46) der Halbschale.

4. Verfahren nach einem der Ansprüche 1 bis 3, **dadurch gekennzeichnet, dass** das Einlegeteil (26) in der vorgegebenen Position mit Positionierungsmitteln (62) positioniert und/oder mit Befestigungsmitteln befestigt wird.

5. Verfahren nach einem der Ansprüche 1 bis 4, **dadurch gekennzeichnet, dass** das Fasermaterial (28) nach dem Anordnen in der Form (24) mit dem flüssigen Kunststoffmaterial durchtränkt wird.

6. Verfahren zur Herstellung eines Windenergieanlagenrotorblatts mit den folgenden Schritten:
• Herstellen einer ersten Halbschale (10) mit dem Verfahren nach einem der Ansprüche 1 bis 5,
• Bereitstellen einer zweiten Halbschale (22),
• Verkleben der ersten Halbschale (10) mit der zweiten Halbschale (22).

7. Verfahren nach Anspruch 6, **dadurch gekennzeichnet, dass** eine Endkante (64) des Rotorblatts von der Hinterkante (18) der ersten Halbschale (10) gebildet ist, und/oder dadurch, dass die Hinterkante (18) der ersten Halbschale (10) jeweils eine aerodynamische Fläche auf einer Druckseite und auf einer Saugseite des Rotorblatts bildet.

8. Verfahren nach Anspruch 6 oder 7, **dadurch gekennzeichnet, dass** entweder die erste Halbschale (10) eine Druckseite des Rotorblatts und eine beim Herstellen der ersten Halbschale (10) an die Oberfläche (40) des Einlegeteils (26) angrenzende Schrägfläche (58) der ersten Halbschale (10) einen Teil der Saugseite des Rotorblatts bildet oder die erste Halbschale (10) eine Saugseite des Rotorblatts und eine beim Herstellen der ersten Halbschale (10) an die Oberfläche (40) des Einlegeteils (26) angrenzende Schrägfläche (58) der ersten Halbschale (10) einen Teil der Druckseite des Rotorblatts bildet.

9. Verfahren nach Anspruch 8, **dadurch gekennzeichnet, dass** die zweite Halbschale (22) mit einer Klebefläche der ersten Halbschale (10) verklebt wird, die benachbart zu der Schrägfläche (58) angeordnet ist.

10. Verfahren nach einem der Ansprüche 6 bis 9, **dadurch gekennzeichnet, dass** sich die zweite Halbschale (22) beim Verkleben in einer weiteren Form (50) befindet, die eine Innenseite (52) aufweist, die über die zweite Halbschale (22) nach hinten übersteht und eine aerodynamische Fläche der zweiten Halbschale (22) nach hinten fortsetzt, wobei die erste Halbschale (10) an die Innenseite (52) der weiteren Form (50) angrenzt.

11. Verfahren nach Anspruch 10, **dadurch gekennzeichnet, dass** eine Klebefuge (60) zwischen erster und zweiter Halbschale (10, 22) im Bereich der Klebefläche bis an die Innenseite (52) der weiteren Form (50) heran mit Klebstoff gefüllt wird.

12. Verfahren zur Herstellung eines Windenergieanlagenrotorblatts mit den folgenden Schritten:
• Bereitstellen einer ersten Halbschale (10) in einer Form (24),
• Bereitstellen einer zweiten Halbschale (22) in einer weiteren Form (50),
• Verkleben der ersten Halbschale (10) mit der zweiten Halbschale (22), **dadurch gekennzeichnet, dass**
• die weitere Form (50) eine Innenseite (52) aufweist, die über die zweite Halbschale (22) nach hinten übersteht und eine aerodynamische Fläche der zweiten Halbschale (22) nach hinten fortsetzt, und
• die erste Halbschale (10) an der Innenseite (52) der weiteren Form (50) anliegt.

13. Verfahren nach Anspruch 12, **dadurch gekennzeichnet, dass** die erste Halbschale (10) eine dünn auslaufende Hinterkante (44) mit einer Schrägfläche (58) aufweist und beim Verkleben mit der zweiten Halbschale (22) mit der Schrägfläche (58) flächig an die Innenseite (52) der Form angrenzt.

14. Verfahren nach Anspruch 12 oder 13, **dadurch gekennzeichnet, dass** eine zwischen den beiden Halbschalen (10, 22) angeordnete Klebefuge (60) bis an die Innenseite (52)der Form heran mit Klebstoff gefüllt wird.

15. Herstellungsform zur Herstellung einer Windenergieanlagenrotorblatthalbschale mit
• einer Form (24), welche eine Innenseite (30), die eine aerodynamische Fläche der Halbschale vorgibt, und eine Quetschkante (32), die den Verlauf einer Hinterkante (18) der Halbschale beschreibt, aufweist, **gekennzeichnet durch**
• ein Einlegeteil (26), das eine Oberfläche (40) aufweist, und
• Positionierungsmittel (62) zur Positionierung und/oder Befestigungsmittel zur Befestigung des Einlegeteils (26) in einer vorgegebenen Position relativ zu der Form (24), wobei
• in der vorgegebenen Position die Oberfläche (40) des Einlegeteils (26) und ein Randabschnitt (38) der Innenseite (30) der Form (24) an der Quetschkante (32) unter einem Winkel aneinandergrenzen, so dass zwischen der Oberfläche (40) des Einlegeteils (26) und dem Randabschnitt (38) eine dünn auslaufende Hinterkante (44) hergestellt werden kann.

## Claims

1. A method for producing a half shell of a rotor blade for a wind turbine with the following steps:
• arranging a fibre material (28) in a mould (24), which has an inner side (30), which predetermines an aerodynamic surface area of the half shell, and a pinching edge (32), which defines the profile of a trailing edge (18) of the half shell,
• curing a liquid plastic material surrounding the fibre material (28), **characterized in that**
• an insert (26) is arranged in relation to the mould (24) in a predetermined position, in which a surface (40) of the insert (26) and a bordering portion (38) of the inner side (30) of the mould (24) adjoin each other at an angle at the pinching edge (32) so that a thinly tapering trailing edge (44) of the half shell is formed between the surface (40) of the insert (26) and the bordering portion (38).

2. The method according to claim 1, **characterized in that** the fibre material (28) arranged in the mould (24) reaches up to the surface (40) of the insert (26).

3. The method according to claim 1 or 2, **characterized in that** the surface (40) of the insert (26) runs from the pinching edge (32) up to a distance from the inner side (30), which is greater than a material thickness (46) of the half shell.

4. The method according to one of claims 1 to 3, **characterized in that** the insert (26) is positioned by positioning means (62) and/or fastened by fastening means in the predetermined position.

5. The method according to one of claims 1 to 4, **characterized in that** the fibre material (28) is saturated with the liquid plastic material after being arranged in the mould (24).

6. A method for producing a rotor blade for a wind turbine with the following steps:
• producing a first half shell (10) by the method according to one of claims 1 to 5,
• providing a second half shell (22),
• adhesively bonding the first half shell (10) to the second half shell (22).

7. The method according to claim 6, **characterized in that** an end edge (64) of the rotor blade is formed by the trailing edge (18) of the first half shell (10), and/or **in that** the trailing edge (18) of the first half shell (10) forms an aerodynamic surface area on both a pressure side and a suction side of the rotor blade.

8. The method according to claim 6 or 7, **characterized in that** either the first half shell (10) forms a pressure side of the rotor blade and an inclined surface (58) of the first half shell (10) adjacent to the surface (40) of the insert (26) during production of the first half shell (10) forms a part of the suction side of the rotor blade or the first half shell (10) forms a suction side of the rotor blade and an inclined surface (58) of the first half shell (10) adjacent to the surface (40) of the insert (26) during production of the first half shell (10) forms a part of the pressure side of the rotor blade.

9. The method according to claim 8, **characterized in that** the second half shell (22) is adhesively bonded to the first half shell (10) by an adhesive area, which is arranged adjacent to the inclined surface (58).

10. The method according to one of claims 6 to 9, **characterized in that** the second half shell (22) is located in a further mould (50) during adhesive bonding, which has an inner side (52), which projects rearwardly beyond the second half shell (22) and rearwardly continues an aerodynamic surface area of the second half shell (22), wherein the first half shell (10) adjoins the inner side (52) of the further mould (50).

11. The method according to claim 10, **characterized in that** an adhesive joint (60) between the first and second half shell (10, 22) in the region of the adhesive area is filled with adhesive up to the inner side (52) of the further mould (50).

12. A method for producing a rotor blade of a wind turbine with the following steps:
• providing a first half shell (10) in a mould (24),
• providing a second half shell (22) in a further mould (50),
• adhesively bonding the first half shell (10) to the second half shell (22), **characterized in that**
• the further mould (50) has an inner side (52), which projects rearwardly beyond the second half shell (22) and rearwardly continues an aerodynamic surface area of the second half shell (22) and
• the first half shell (10) abuts against the inner side (52) of the further mould (50).

13. The method according to claim 12, **characterized in that** the first half shell (10) has a thinly tapering trailing edge (44) with an inclined surface (58) and abuts with the inclined surface (58) in a planar manner against the inner side (52) of the mould during adhesive bonding to the second half shell (22).

14. The method according to claim 12 or 13, **characterized in that** an adhesive joint (60) arranged between the two half shells (10, 22) is filled with adhesive up to the inner side (52) of the mould.

15. A production mould for producing a half shell of a rotor blade of a wind turbine with
• a mould (24), which has an inner side (30), which predetermines an aerodynamic surface area of the half shell, and a pinching edge (32), which defines the profile of a trailing edge (18) of the half shell, **characterized by**
• an insert (26), which has a surface (40), and
• positioning means (62) for positioning and/or fastening means for fastening the insert (26) in a predetermined position relative to the mould (24), wherein
• in the predetermined position, the surface (40) of the insert (26) and a bordering portion (38) of the inner side (30) of the mould (24) adjoin each other at an angle at the pinching edge (32), so that a thinly tapering trailing edge (44) can be produced between the surface (40) of the insert (26) and the bordering portion (38).

## Revendications

1. Procédé de fabrication d'une demi-coque pour pale de rotor d'éolienne, avec les étapes suivantes :
• disposition d'un matériau de fibre (28) dans une moule (24) qui présente un côté intérieur (30) qui prédéfinit une surface aérodynamique de la demi-coque, et une arête d'écrasement (32) qui décrit le tracé d'une arête arrière (18) de la demi-coque,
• durcissement d'une matière plastique liquide entourant le matériau de fibre (28), **caractérisé en ce**
• **qu'**une pièce d'insertion (26) est, par rapport au moule (24), disposée dans une position prédéfinie dans laquelle une surface (40) de la pièce d'insertion (26) et un tronçon marginal (38) du côté intérieur (30) du moule (24) sont contigus à l'arête d'écrasement (32) en formant un angle de telle sorte qu'une arête arrière (44) de la demi-coque se terminant de façon effilée est constituée entre la surface (40) de la pièce d'insertion (26) et le tronçon marginal (38).

2. Procédé selon la revendication 1, **caractérisé en ce que** le matériau de fibre (28) disposé dans le moule (24) s'étend jusqu'à la surface (40) de la pièce d'insertion (26).

3. Procédé selon la revendication 1 ou 2, **caractérisé en ce que** la surface (40) de la pièce d'insertion (26) s'étend de l'arête d'écrasement (32) jusqu'à une distance du côté intérieur (30) qui est supérieure à une épaisseur de matériau (46) de la demi-coque.

4. Procédé selon une des revendications 1 à 3, **caractérisé en ce que** la pièce d'insertion (26) est positionnée dans la position prédéfinie avec des moyens de positionnement (62) et/ou avec des moyens de fixation.

5. Procédé selon une des revendications 1 à 4, **caractérisé en ce que** le matériau de fibre (28), après la disposition dans le moule (24), est imprégné avec la matière plastique liquide.

6. Procédé de fabrication d'une pale de rotor d'éolienne, avec les étapes suivantes :
• fabrication d'une première demi-coque (10) avec le procédé selon une des revendications 1 à 5,
• fourniture d'une deuxième demi-coque (22),
• collage de la première demi-coque (10) avec la deuxième demi-coque (22).

7. Procédé selon la revendication 6, **caractérisé en ce qu'**une arête d'extrémité (64) de la pale de rotor est formée de l'arête arrière (18) de la première demi-coque (10), et/ou **en ce que** l'arête arrière (18) de la première demi-coque (10) forme respectivement une surface aérodynamique sur un côté pression et sur un côté aspiration de la pale de rotor.

8. Procédé selon la revendication 6 ou 7, **caractérisé en ce que**, soit la première demi-coque (10) forme un côté pression de la pale de rotor, et une surface oblique (58) de la première demi-coque (10) qui, lors de la fabrication de la première demi-coque (10), jouxte la surface (40) de la pièce d'insertion (26) forme une partie du côté aspiration de la pale de rotor, soit la première demi-coque (10) forme un côté aspiration de la pale de rotor, et une surface oblique (58) de la première demi-coque (10) jouxtant, lors de la fabrication de la première demi-coque (10), la surface (40) de la pièce d'insertion (26) forme une partie du côté pression de la pale de rotor.

9. Procédé selon la revendication 8, **caractérisé en ce que** la deuxième demi-coque (22) est collée à une surface de collage de la première demi-coque (10) qui est disposée au voisinage de la surface oblique (58).

10. Procédé selon une des revendications 6 à 9, **caractérisé en ce que** la deuxième demi-coque (22) est, lors du collage, située dans un autre moule (50) qui présente un côté intérieur (52) qui dépasse de la deuxième demi-coque (22) vers l'arrière et prolonge vers l'arrière une surface aérodynamique de la deuxième demi-coque (22), la première demi-coque (10) jouxtant le côté intérieur (52) de l'autre moule (50).

11. Procédé selon la revendication 10, **caractérisé en ce qu'**un joint de collage (60) entre la première et la deuxième demi-coque (10, 22) est rempli de colle dans la zone de la surface de collage jusqu'au côté intérieur (52) de l'autre moule (50).

12. Procédé de fabrication d'une pale de rotor d'éolienne, avec les étapes suivantes :
• fourniture d'une première demi-coque (10) dans un moule (24),
• fourniture d'une deuxième demi-coque (22) dans un autre moule (50),
• collage de la première demi-coque (10) avec la deuxième demi-coque (22), **caractérisé en ce que**
• l'autre moule (50) présente un côté intérieur (52) qui dépasse de la deuxième demi-coque (22) vers l'arrière et prolonge vers l'arrière une surface aérodynamique de la deuxième demi-coque (22), et
• la première demi-coque (10) repose contre le côté intérieur (52) de l'autre moule (50).

13. Procédé selon la revendication 12, **caractérisé en ce que** la première demi-coque (10) présente une arête arrière (44) se terminant de façon effilée et ayant une surface oblique (58) et, lors du collage avec la deuxième demi-coque (22) ayant la surface oblique (58) jouxte, à plat, le côté intérieur (52) du moule.

14. Procédé selon la revendication 12 ou 13, **caractérisé en ce qu'**un joint de collage (60) disposé entre les deux demi-coques (10, 22) est rempli de colle jusqu'au côté intérieur (52) du moule.

15. Moule de fabrication pour la fabrication d'une demi-coque pour pale de rotor d'éolienne, avec
• un moule (24) qui présente un côté intérieur (30) qui prédéfinit une surface aérodynamique de la demi-coque, et une arête d'écrasement (32) qui décrit le tracé d'une arête arrière (18) de la demi-coque, **caractérisé par**
• une pièce d'insertion (26) qui présente une surface (40), et
• des moyens de positionnement (62) pour le positionnement et/ou des moyens de fixation pour la fixation de la pièce d'insertion (26) dans une position prédéfinie par rapport au moule (24),
• la surface (40) de la pièce d'insertion (26) et un tronçon marginal (38) du côté intérieur (30) du moule (24) étant, dans la position prédéfinie, contigus à l'arête d'écrasement (32) en formant un angle de telle sorte que, entre la surface (40) de la pièce d'insertion (26) et le tronçon marginal (38), une arête arrière (44) se terminant de façon effilée pouvant être fabriquée.
